Europäisches Patentamt

European Patent Office

Office européen des brevets

(19)

(11) Numéro de publication : **0 090 701**
**B1**

# (12) FASCICULE DE BREVET EUROPÉEN

(45) Date de publication du fascicule du brevet :
28.05.86

(21) Numéro de dépôt : 83400530.8

(22) Date de dépôt : 15.03.83

(51) Int. Cl.⁴ : **F 16 C 29/10, B 60 N 1/08**

(54) **Mécanisme à glissières, notamment pour siège de véhicule automobile.**

(30) Priorité : 31.03.82 FR 8205518

(43) Date de publication de la demande :
05.10.83 Bulletin 83/40

(45) Mention de la délivrance du brevet :
28.05.86 Bulletin 86/22

(84) Etats contractants désignés :
DE GB IT SE

(56) Documents cités :
FR-A- 2 098 852
GB-A- 942 976
GB-A- 1 391 231
GB-A- 2 064 317
US-A- 2 715 433

(73) Titulaire : **COMPAGNIE INDUSTRIELLE DE MECANIS-MES en abrégé C.I.M. Société dite:**
**6, Rue Barbès**
**F-92302 Levallois-Perret (FR)**

(72) Inventeur : **Chevalier, Claude**
**91 Route de Cerdon**
**F-45600 Sully sur Loire (FR)**

(74) Mandataire : **Moncheny, Michel et al**
**c/o Cabinet Lavoix 2 Place d'Estienne d'Orves**
**F-75441 Paris Cedex 09 (FR)**

EP 0 090 701 B1

Jouve, 18, rue St-Denis, 75001 Paris, France

## Description

La présente invention est relative à un mécanisme à glissières pour relier deux ensembles en leur conservant un degré de liberté de translation.

Ce mécanisme, notamment utilisé pour le montage des sièges avant d'automobile, est du type comprenant deux profilés en U qui s'emboîtent tête-bêche l'un dans l'autre avec possibilité de coulissement longitudinal et des butées portées respectivement par l'un et l'autre profilés qui, à chaque fin de course de coulissement, forment des paires qui coopèrent par l'intermédiaire d'éléments cinématiques, de roulement ou de glissement, interposés entre les deux profilés.

Pour amener une glissière d'une position extrême à l'autre relativement à la glissière appariée, on immobilise la seconde glissière puis on pousse sur la première dans le sens voulu jusqu'à ce que des butées arrêtent le mouvement. La poussée motrice n'étant pas généralement contrôlée, l'arrêt intervient à la suite de chocs entre butées de limitation de course s'effectuant par l'intermédiaire d'éléments cinématiques. Après des manœuvres répétées, la succession des chocs sur les éléments cinématiques provoque leur déformation ce qui détermine une détérioration rapide du mécanisme se traduisant d'abord par une résistance excessive à la poussée puis éventuellement par un blocage pur et simple.

L'invention a pour but d'éviter cette détérioration précoce des éléments cinématiques.

L'invention a ainsi pour objet un mécanisme à glissières du type précité, caractérisé en ce que les paires de butées coopèrent en outre par l'intermédiaire d'organes élastiquement compressibles formant amortisseurs.

Dans un mode de réalisation avantageux, chaque paire de butée coopère par l'intermédiaire de deux éléments cinématiques entre lesquels est interposé un organe élastiquement compressible dans la direction du mouvement.

Dans une variante économique à réaliser, entre chaque élément cinématique et l'organe élastiquement compressible est disposée une entretoise de forme allongée.

L'invention va être décrite plus en détail ci-dessous en se référant aux dessins annexés donnés uniquement à titre d'exemple et sur lesquels :

la Fig. 1 et la Fig. 2 sont des vues schématiques de côté montrant un premier mécanisme selon l'invention respectivement dans les deux positions extrêmes des glissières ;

la Fig. 3 et la Fig. 4 sont des vues analogues montrant un second mécanisme selon l'invention respectivement dans les deux positions extrêmes des glissières ;

la Fig. 5 est une vue en élévation du mode de réalisation préféré de l'invention ;

la Fig. 6 est une vue de dessus de ce mode de réalisation préféré de l'invention ;

la Fig. 7 est une vue de détail du mode de réalisation préféré montrant une paire de butées coopérant par l'intermédiaire d'éléments cinématiques et d'un organe élastiquement compressible, en coupe suivant la ligne 7-7 de la Fig. 5.

Sur les Figures les éléments identiques portent les mêmes numéros de référence.

Dans les trois modes de réalisation représentés aux dessins annexés, les deux glissières 10 et 20 sont des profilés métalliques à section de forme générale en U. La glissière inférieure 20, destinée à être fixée sur un plancher d'automobile, est emboîtée tête-bêche dans la glissière supérieure 10 qui est destinée à être fixée sous un siège avant du véhicule. Le coulissement relatif des deux glissières est facilité par des billes d'acier 30 interposées entre les faces en regard des couples d'ailes adjacentes des deux profilés.

En fin de course de coulissement, les billes 30 sont arrêtées par des butées en saillie d'une part sur la surface externe des ailes de la glissière inférieure 20 et d'autre part sur la surface interne des ailes de la glissière supérieure 10. Ces butées sont constituées par des crevés pratiqués symétriquement sur chaque aile des profilés.

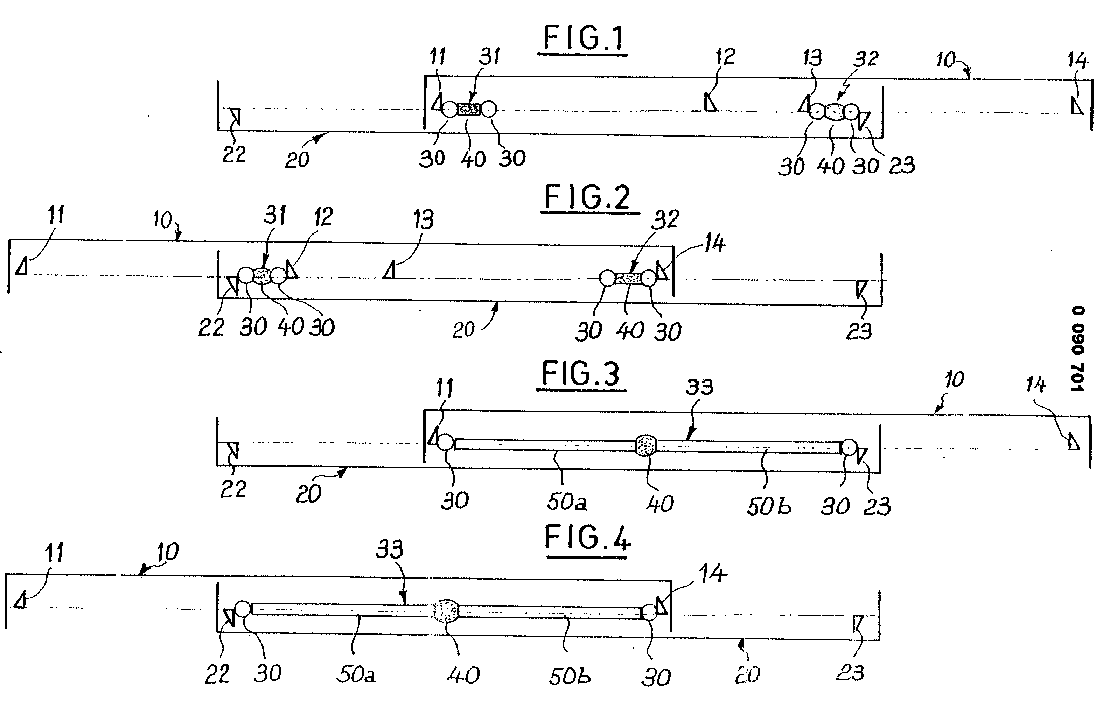

Dans le premier mode de réalisation (Fig. 1 et 2), la glissière supérieure 10 comporte sur chaque aile quatre butées 11, 12, 13 et 14 et la glissière inférieure 20 deux butées 22 et 23 également sur chaque aile.

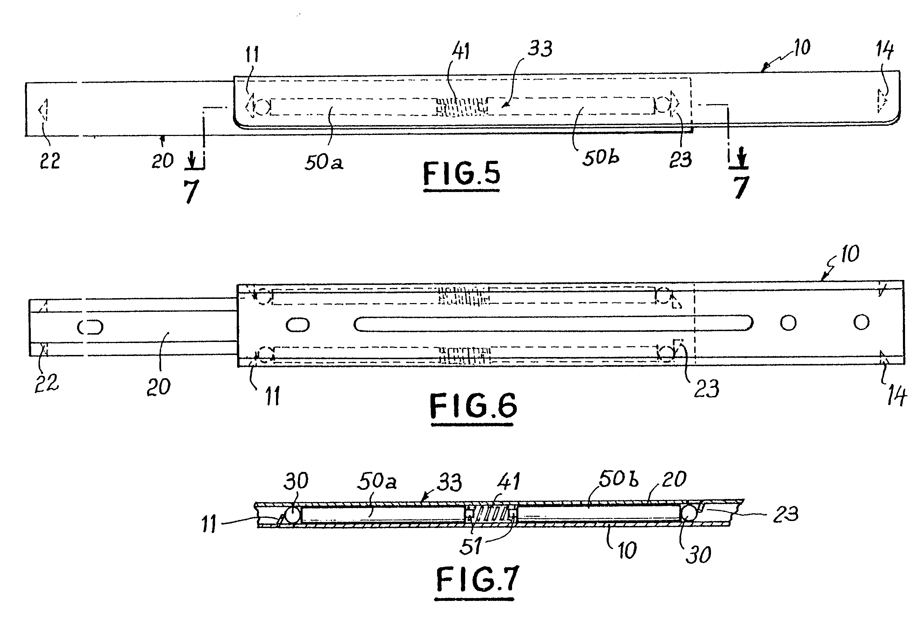

Dans le second mode de réalisation (Fig. 3 et 4) ainsi que dans le mode de réalisation préféré (Fig. 5 et 6), la glissière supérieure 10 ne comporte sur chaque aile que les butées extrêmes 11 et 14, tandis que la glissière inférieure présente sur chaque aile les deux butées 22 et 23 comme précédemment.

Sur les quatre premières figures ces butées sont représentées schématiquement par des triangles ayant un côté horizontal et le sommet opposé à ce côté situé au-dessus ou au-dessous de ce côté selon qu'il s'agit d'une butée de la glissière supérieure ou d'une butée de la glissière inférieure.

Dans le premier mode de réalisation (Fig. 1 et 2), les billes 30 interposées entre les faces en regard d'un couple d'ailes adjacentes sont regroupées en deux trains 31 et 32 comprenant chacun deux billes séparées par un tampon 40 en matière élastique. Le tampon 40 a une forme cylindrique de diamètre légèrement inférieur à celui des billes.

Dans le second mode de réalisation (Fig. 3 et 4), les billes 30 interposées entre les faces en regard d'un couple d'ailes adjacentes sont au nombre de deux séparées par un tampon 40 en matière élastique et par deux entretoises 50$^a$ et 50$^b$ placées respectivement entre chaque bille 30 et le tampon 40. L'ensemble billes-tampon-entretoises constitue un train unique 33 mobile le long des glissières. Les entretoises 50$^a$ et 50$^b$ sont cylindriques, de forme allongée et ont comme le tampon un diamètre légèrement inférieur à celui des billes.

Le mode de réalisation préféré (Fig. 5 et 6) est une variante du second mode de réalisation dans laquelle le tampon 40 est remplacé par un ressort hélicoïdal 41 dont l'axe est parallèle à la direction du mouvement. Ce ressort a un diamètre extérieur à peu près égal à celui des entretoises 50ᵃ et 50ᵇ et s'emboîte à chaque extrémité sur un téton de centrage 51 prévu à l'extrémité adjacente de chaque entretoise.

Les positions extrêmes de coulissement des glissières sont déterminées par l'entrée en coopération de butées portées respectivement par l'un et l'autre des profilés :

dans le premier mode de réalisation, la position extrême vers la droite de la glissière supérieure 10 est déterminée (Fig. 1) par les butées 13 et 23 qui coopèrent par l'intermédiaire du train 32 en comprimant longitudinalement son tampon élastique 40. De même, la position extrême vers la gauche (Fig. 2) est déterminée par les butées 12 et 22 coopérant par l'intermédiaire du train 31 ;

dans le second mode de réalisation, la position extrême vers la droite de la glissière supérieure 10 est déterminée (Fig. 3) par les butées 11 et 23 coopérant par l'intermédiaire du train 33, tandis que la position extrême vers la gauche de cette même glissière est déterminée (Fig. 4) par les butées 14 et 22 coopérant par l'intermédiaire du même train 33, le tampon 40 étant comprimé longitudinalement dans chaque cas. Des phénomènes analogues se produisent dans le cas des Fig. 5 à 7 où c'est cependant le ressort 41 qui est comprimé.

Conformément à l'invention, les arrêts en fin de course de coulissement ne sont pas provoqués par des chocs brutaux des butées sur des billes : le mouvement est stoppé progressivement par la compression des éléments élastiques 40 ou 41. On évite ainsi le martelage des billes, ce en mettant à profit l'espace disponible entre les ailes des deux profilés.

Cet effet d'amortissement est particulièrement avantageux dans le cas de glissières à commande électrique, où les fins de course doivent être progressives pour garantir la longévité non seulement des glissières mais aussi des moteurs de commande.

## Revendications

1. Mécanisme à glissières comprenant deux profilés en U (10, 20) qui s'emboîtent tête-bêche l'un dans l'autre avec possibilité de coulissement longitudinal, et des butées (11, 12, 13, 14, 22, 23) portées respectivement par l'un et l'autre profilés qui, à chaque fin de course de coulissement, forment des paires qui coopèrent par l'intermédiaire d'éléments cinématiques (30) de roulement ou de glissement interposés entre les deux profilés, caractérisé en ce que les paires de butées (13-23, 12-22) coopèrent en outre par l'intermédiaire d'organes élastiquement compressibles (40, 41) formant amortisseurs.

2. Mécanisme selon la revendication 1, caractérisé en ce que les organes élastiquement compressibles (40, 41) sont disposés librement entre les deux profilés.

3. Mécanisme selon la revendication 2, caractérisé en ce que chaque paire de butées (13-23, 12-22) coopère par l'intermédiaire de deux éléments cinématiques (30) entre lesquels est interposé un organe (40, 41) élastiquement compressible dans la direction du mouvement.

4. Mécanisme selon l'une quelconque des revendications 1 à 3, caractérisé en ce que les organes élastiquement compressibles sont des tampons (40) en matière élastique.

5. Mécanisme selon l'une quelconque des revendications 1 à 3, caractérisé en ce que les organes élastiquement compressibles sont des ressorts hélicoïdaux (41) d'axe parallèle à la direction du mouvement.

6. Mécanisme selon l'une quelconque des revendications 3 à 5, caractérisé en ce qu'entre chaque élément cinématique (30) et l'organe élastiquement compressible (40, 41) est disposée une entretoise de forme allongée (50ᵃ, 50ᵇ).

7. Mécanisme selon les revendications 5 et 6 prises ensemble, caractérisé en ce que chaque extrémité du ressort (41) s'emboîte sur un téton de centrage prévu à l'extrémité adjacente de chaque entretoise (50ᵃ, 50ᵇ).

## Claims

1. A slide mechanism comprising two U-section members (10, 20) which are fitted one inside the other in head-to-toe relation with possibility of a longitudinal sliding, and abutments (11, 12, 13, 14, 22, 23) respectively carried by both section members which, at each end of the sliding travel, constitute pairs of abutments which cooperate through the medium of kinematic rolling or sliding elements (30) interposed between the two section members, characterised in that the pairs of abutments (13-23, 12-22) also cooperate through the medium of elastically compressible elements (40, 41) constituting shock absorbers.

2. A mechanism according to claim 1, characterised in that the elastically compressible elements (40, 41) are freely disposed between the two section members.

3. A mechanism according to claim 2, characterised in that each pair of abutments (13-23, 12-22) cooperates through the medium of two kinematic elements (30) between which is interposed an element (40, 41) which is elastically compressible in the direction of the movement.

4. A mechanism according to any one of the claims 1 to 3, characterised in that the elastically compressible elements are pads (40) of elastic material.

5. A mechanism according to any one of the claims 1 to 3, characterised in that the elastically compressible elements are coil springs (41) having their axes parallel to the direction of the movement.

6. A mechanism according to any one of the claims 3 to 5, characterised in that an elongated spacer element (50a, 50b) is disposed between each kinematic element (30) and the elastically compressible element (40, 41).

7. A mechanism according to claims 5 and 6 taken together, characterised in that each end of the spring (41) is fitted on a centering spigot provided at the adjacent end of each spacer element (50a, 50b).

**Patentansprüche**

1. Gleitschienenvorrichtung mit zwei U-Profilen (10, 20), welche sich mit der Möglichkeit eines Gleitens in Längsrichtung umgekehrt ineinander legen, und Anschlägen (11, 12, 13, 14, 22, 23), welche auf dem einen bzw. dem anderen Profil sitzen und an jedem Ende des Gleitweges Paare bilden, welche über kinematische Roll- oder Gleitelemente (30), welche zwischen den beiden Profilen liegen, zusammenwirken, dadurch gekennzeichnet, daß die Paare von Anschlägen (13-23, 12-22) überdies über elastisch zusammendrückbare Einrichtungen (40, 41), welche Stoßdämpfer bilden, zusammenwirken.

2. Vorrichtung nach Anspruch 1, dadurch gekennzeichnet, daß die elastisch zusammendrückbaren Einrichtungen (40, 41) frei zwischen den beiden Profilen angeordnet sind.

3. Vorrichtung nach Anspruch 2, dadurch gekennzeichnet, daß jedes Paar von Anschlägen (13-23, 12-22) über zwei kinematische Elemente (30), zwischen welchen eine in Bewegungsrichtung elastisch zusammendrückbare Einrichtung (40, 41) angeordnet ist, zusammenwirkt.

4. Vorrichtung nach irgendeinem der Ansprüche 1 bis 3, dadurch gekennzeichnet, daß die elastisch zusammendrückbaren Einrichtungen Puffer (40) aus elastischem Werkstoff sind.

5. Vorrichtung nach irgendeinem der Ansprüche 1 bis 3, dadurch gekennzeichnet, daß die elastisch zusammendrückbaren Einrichtungen Schraubenfedern (41) mit zur Bewegungsrichtung paralleler Achse sind.

6. Vorrichtung nach irgendeinem der Ansprüche 3 bis 5, dadurch gekennzeichnet, daß zwischen jedem kinematischen Element (30) und der elastisch zusammendrückbaren Einrichtung (40, 41) ein langgestrecktes Abstandsteil (50a, 50b) angeordnet ist.

7. Vorrichtung nach den Ansprüchen 5 und 6 gemeinsam, dadurch gekennzeichnet, daß jedes Ende der Feder (41) sich um einen Zentrieransatz legt, welcher am angrenzenden Ende eines jeden Abstandsteils (50a, 50b) vorgesehen ist.

FIG.1

FIG.2

FIG.3

FIG.4

**FIG.5**

**FIG.6**

**FIG.7**

0 090 701